# EUROPÄISCHE PATENTSCHRIFT

(11) **EP 1 174 283 B1**
(45) Veröffentlichungstag und Bekanntmachung des Hinweises auf die Patenterteilung: **12.11.2003**
(21) Anmeldenummer: 01116993.5
(22) Anmeldetag: 12.07.2001
(51) Int. Cl.: B60B 3/16, F16B 39/282, F16B 39/24

(54) **Lösbares Verbindungselement für ein Fahrzeugrad, mit einem Schraubteil und einem Stützring**
Releasable fastener for a vehicle wheel with a screwed part and a support ring
Dispositif de fixation amovible pour une roue de véhicule, avec un element de vissage et une bague de support

(30) Priorität: 18.07.2000 DE 10034748
(43) Veröffentlichungstag der Anmeldung: 23.01.2002
(73) Patentinhaber: Kamax-Werke Rudolf Kellermann GmbH & Co. KG, 37520 Osterode am Harz (DE)
(72) Erfinder: Hartmann, Gunther, Dipl.-Ing., 36304 Alsfeld (DE); Sommer, Wolfgang, Dipl.-Ing., 35285 Gemünden (Wohra) (DE); Wagner, Frank, Dipl.-Ing., 35418 Grossen Buseck (DE)
(74) Vertreter: Patentanwälte Rehberg + Hüppe

(56) Entgegenhaltungen:
- EP-A- 0 836 016
- DE-A- 4 429 312
- GB-A- 2 136 077
- US-A- 5 090 855

## Beschreibung

Die Erfindung betrifft ein lösbares Verbindungselement für ein Fahrzeugrad, mit einem Schraubteil, insbesondere einer Radschraube, und einem Stützring, der an dem Schraubteil drehbar angeordnet ist, wobei das Schraubteil einen Gewindeabschnitt und eine Abstützfläche zur Übertragung einer Axialkraft auf den Stützring aufweist und der Stützring eine Gegenabstützfläche und eine nicht-ebene Anlagefläche für die Übertragung der Axialkraft auf das Fahrzeugrad besitzt. Die Erfindung läßt sich auch in Verbindung mit einer Radmutter anwenden, bei der also die Radmutter das Schraubteil darstellt, dem ebenfalls ein Stützring zugeordnet ist. Der Stützring ist in aller Regel, insbesondere zur Erleichterung der Montage, unverlierbar mit dem Schraubteil verbunden. Die Verbindung ist so gestaltet, daß sich der Stützring nicht nur relativ zum Schraubteil verdrehen kann, sondern daß im Rahmen eines vorgesehenen Bewegungsspiels ein radialer Versatz der Achsen gegeneinander möglich ist. Dies beschränkt sich freilich auf einen engen Bereich, wie er beispielsweise zum Ausgleich von Teilungsfehlern der Durchbrechung der Radschüssel und/oder der Nabe sinnvoll ist.

Ein lösbares Verbindungselement der eingangs beschriebenen Art in Form einer Radschraube ist aus der EP 0 836 016 A2 bekannt. Die Radschraube besitzt einen Kopf und einen Schaft, der mit einem Gewindeabschnitt versehen ist. Der Kopf der Radschraube weist auf der dem Stützring zugekehrten Seite eine Abstützfläche zur Übertragung einer Axialkraft auf den Stützring auf. Diese Abstützfläche ist als ebene Fläche ausgebildet. In Zuordnung hierzu besitzt der Stützring eine ebenfalls eben ausgebildete Gegenabstützfläche. Andererseits weist der Stützring auf der dem Fahrzeugrad zugekehrten Seite eine kegelstumpfförmige oder auch kugelförmig ausgebildete, also eine nicht-ebene Anlagefläche für die Übertragung der Axialkraft auf das Fahrzeugrad auf. Der Stützring ist über mindestens eine Verstemmung drehbar an der Radschraube gelagert und damit unverlierbar gehalten. In der Regel sind vier Verstemmungen über den Umfang verteilt angeordnet. Der Stützring soll über diese Verstemmungen mit der Radschraube so verbunden sein, daß dieser noch drehbar auf dem Schaft der Radschraube ist und somit wenig Reibung zwischen dem Stützring und dem Kopf der Schraube beim Befestigen des Rades entsteht. Der Stützring kann aus einer Leichtmetallegierung bestehen, während die Radschraube aus Stahl gefertigt ist. In Verbindung mit einem Fahreugrad aus Magnesium wird so eine Kontaktkorrosion zwischen dem Stützring und dem Fahrzeugrad vermieden. Es mag zwar sinnvoll sein, das Verbindungselement so auszubilden, daß beim Befestigen des Rades zwischen Stützring und Schraubenkopf möglichst wenig Reibung entsteht. Diese geringe Reibung ist aber hinsichtlich des selbsttätigen Lösens der Radschrauben nachteilig. Bei solchen Verbindungselementen besteht insbesondere bei Querbelastung die Gefahr das selbsttätigen Lösens. Dieser Gefahr kommt besondere Bedeutung zu, wenn man steigende Motorleistungen und Fahrzeuggewichte berücksichtigen will und in Betracht zieht, daß diese Verbindungselemente einer erheblichen Querbelastung beim Beschleunigen und Bremsen ausgesetzt sind. Zusätzlich besteht die Gefahr des Setzens solcher Verbindungselemente, insbesondere durch die am Fahrzeug unvermeidlich auftretenden Vibrationen und Schwingungen, wodurch die Axialkraft abgebaut wird. Dies führt dazu, daß sich solche Verbindungselemente bei entsprechender Querbelastung dann noch leichter von selbst lösen können.

Andererseits sind Schrauben bekannt, deren Abstützfläche unter dem Kopf in besonderer Weise ausgebildet ist, um die Gefahr des selbsttätigen Lösens bei Belastung zu vermindern. Dabei ist die Abstützfläche unter dem Kopf mit einer Keilflächenverzahnung versehen, die so ausgebildet und angeordnet ist, daß sich die Schraube vergleichsweise leicht anziehen läßt, indem entsprechend schwach geneigte Flächen der Keilflächenverzahnung über das Bauteil gleiten, während sich die Zähne nach dem Festziehen und unter Belastung in das Material des zu verschraubenden Bauteils eingraben und damit einen erhöhten Widerstand hervorrufen, der beim Lösen und beim Losdrehen der Schraube aufgebracht bzw. überwunden werden muß. Diese Keilflächenverzahnung zielt also darauf ab, beim Anziehen der Schraube ein Gleiten der Abstützfläche auf dem Bauteil zu ermöglichen, dagegen beim Lösen und Losdrehen möglichst Bedingungen zu schaffen, die ein erhöhtes Löse- und Losdrehmoment erfordern, um gleichsam einen Formschluß zu überwinden. Auch die Materialpaarung zwischen Schraube und Bauteil muß aufeinander abgestimmt werden. Es versteht sich, daß nur die Schraube eine Keilflächenverzahnung aufweist, während das Bauteil eine ebene bzw. glatte Anlagefläche besitzt. Damit wird durch die Erhöhung der Reibung zwischen der Abstützfläche des Kopfes der Schraube und der entsprechenden Gegenfläche am Bauteil in der Regel ein selbsttätiges Lösen wirkungsvoll verhindert. Andererseits ist ein bewußtes Losdrehen der Schraube unter Aufbringung eines entsprechend erhöhten Losdrehmomentes möglich. Die Mehrfachverwendung solcher Schrauben ist begrenzt.

Aus der DE-OS 24 13 760, der US 3,263,727 und der EP 0 131 556 sind Federringanordnungen bekannt, die in Verbindung mit einer Schraube, eingesetzt werden. Die Federringanordnungen weisen zwei aufeinanderliegende Federringe auf, die identisch ausgebildet sein können und punktsymmetrisch aufeinander liegen. Diese beiden Federringe kommen zwischen der ebenen Abstützfläche am Kopf der Schraube und der ebenfalls ebenen Anlagefläche am Bauteil zur Anlage bzw. zur Wirkung. Die beiden Federringe weisen auf ihren nach außen gekehrten Oberflächen, also der Abstützfläche am Kopf zugekehrt einerseits und der Auflagefläche am Bauteil andererseits, eine die Reibung erhöhende Verzahnung, meist in Form radial angeordneter Rippen oder dgl. auf. Die beiden Federringe sind auf den einander zugekehrten Flächen mit Keilflächenverzahnungen versehen, die sich aus geneigten ebenen Flächenanteilen und gegebenenfalls weiteren senkrecht zur Achse der Federanordnung bzw. der Schraube angeordneten Flächenteilen zusammensetzen. Die geneigt angeordneten Flächenteile sind in Umfangsrichtung unterschiedlich geneigt angeordnet, um beim Anziehen der Schraube Formschluß zwischen den beiden Federringen bzw. Federscheiben herbeizuführen, jedoch in Losdrehrichtung die entsprechenden Keilflächen nach Art einer schiefen Ebene aufeinander gleiten zu lassen, um so eine Erhöhung der Axialkraft herbeizuführen. Beim Lösen oder Losdrehen der Verbindung muß diese erhöhte Axialkraft überwunden werden. Derartige Federringanordnungen sind teuer in der Herstellung und erhöhen die Anzahl der an einer Verschraubung einzusetzenden Teile. Zusätzlich müssen die beiden Federringe neben der Schraube gehandhabt und vor allen Dingen lagerichtig eingebaut werden. Die Federringe sind als verlierbare Zusatzteile vorgesehen. Die Verwendung von zusätzlichen Federringen in Verbindung mit lösbaren Schrauben erbringt den weiteren Nachteil, daß sich durch ihre Anwendung die Anzahl der Trenn- und Setzfugen zwischen den einzelnen Elementen der Verschraubung erhöht. Je größer die Anzahl dieser Setzfugen ist, je höher sind die dadurch verursachten Setzbeträge der Verschraubung, so daß ein gefährlicher Abbau der Axialkraft die Folge sein kann. Dies gilt insbesondere dann, wenn die bei der Verschraubung eingesetzten Elemente eine besondere Oberflächenausbildung aufweisen, sei es in Form einer korrosionshindernden Beschichtung, eines Überzuges oder dgl. und diese Elemente unter Betriebsbedingungen einer erhöhten Temperatur ausgesetzt sind. Bei lösbaren Verbindungselementen für die Befestigung eines Fahrzeugrades kommen solche zusätzlichen Federringanordnungen ohnehin nicht in Frage, weil die entsprechende Anlagefläche an der Radschüssel eine kegelige oder kugelige Form besitzt, also eine nicht-ebene Anlagefläche darstellt. Da solche Radschrauben oder Radmuttern auch häufig gelöst und wieder angezogen werden müssen, ergeben sich besondere Bedingungen, die der Anwendung einer Federscheibenanordnung entgegenstehen.

Erschwerend tritt hinzu, daß die Verwendung von Radschrauben oder Radmuttern als lösbare Verbindungselemente für Fahrzeugräder unter korrosionsfördernden Bedingungen stattfindet. Um das Korrosionsverhalten zu verbessern, ist es bekannt, die Radschrauben und die Stützringe z. B. mit einer Zinklamellenbeschichtung zu versehen, also einem Überzug, der Kunststoffanteile und darin enthaltene Metallpartikel, insbesondere aus Zink, Aluminium und dgl., enthält. Derartige Beschichtungen verbessern zwar das Korrosionsverhalten, verschlechtern aber andererseits die Setzeigenschaften. Die entsprechenden Setzbeträge, die an solchen Verbindungselementen auftreten, erhöhen sich mit der Anzahl der Trennfugen zwischen den Elementen und der Dicke der Beschichtung.

Der Erfindung liegt die Aufgabe zugrunde, ein lösbares Verbindungselement der eingangs beschriebenen Art bereitzustellen, welches dennoch in der speziellen Anwendung einen sicheren Radfestsitz auch bei hohen Motorleistungen, hohen Fahrzeuggewichten und extrem beanspruchten Fahrzeugrädern ermöglicht. Das lösbare Verbindungselement soll aus möglichst wenig Einzelteilen bestehen, eine einfache und sichere Montage ermöglichen und schließlich die Bedingungen der Mehrfachverwendbarkeit erfüllen.

Erfindungsgemäß wird dies bei dem lösbaren Verbindungselement der eingangs beschriebenen Art dadurch erreicht, daß das Schraubteil auf seiner dem Stützring zugekehrten Abstützfläche eine erste Keilflächenverzahnung und der Stützring auf der dem Schraubteil zugekehrten Gegenabstützfläche eine korrespondierende zweite Keilflächenverzahnung aufweisen, und daß die beiden Keilflächenverzahnungen so ausgebildet und angeordnet sind, daß beim Anziehen des Verbindungselements zwischen Schraubteil und Stützring Formschluß entsteht, während beim Lösen die Keilflächenverzahnungen aufeinander gleiten und das Schraubteil und der Stützring unter Erhöhung der Axialkraft auseinandergedrückt werden.

Die Erfindung geht von dem Gedanken aus, die bisher bekannten lösbaren Verbindungselemente in Form von Radschrauben und Radmuttern, jeweils mit Stützring, zu verbessern, ohne die Anzahl der Teile zu vergrößern. Die Anwendung der Keilflächenverzahnungen erbringt eine Erhöhung der Axialkraft beim selbsttätigen Lösen, wirkt also dem Lösen bei erhöhten Beanspruchungen entgegen. Querkräfte, die bei entsprechender Belastung auf die Elemente des Verbindungselements einwirken, führen bei bekannten Verbindungselementen normalerweise zu einem selbsttätigen Lösen des Schraubteils. Durch das Aufgleiten der beiden Keilflächenverzahnungen aufeinander wird diese Lösebewegung beendet und einem weiteren Abfall der Vorspannkraft entgegengewirkt. Durch diese unvermeidliche Lösebewegung bei Querbeanspruchung findet also bei dem erfindungsgemäßen Verbindungselement in Verbindung mit den Keilflächenerzahnungen eine axiale und tangentiale Bewegung des Schraubteils gegenüber dem Stützring statt. Daraus resultiert vorteilhaft ein Ausgleich von Vorspannkraftverlusten. Dies gilt insbesondere dann, wenn die Vorspannkraft durch unvermeidliche Setzerscheinungen bereits verringert und damit der durch Reibschluß zwischen den verspannten Teilen, nämlich der Radschüssel und der Nabe, übertragbare Anteil der Querkraft vermindert wurde. Ein ähnlicher Fall liegt vor, wenn die Radverschraubung z. B. durch unsachgemäße Wartung nicht mit dem üblicherweise vorgeschriebenen Drehmoment angezogen und damit das für eine sichere Verbindung erforderliche Vorspannkraftniveau nicht erreicht wurde. Insofern stellt die Erfindung auch einen Beitrag zur Erhöhung der Fahrsicherheit dar.

Durch die Aufteilung der ersten Keilflächenverzahnung auf das Schraubteil, also die Radschraube bzw. Radmutter, und der zweiten Keilflächenverzahnung auf den Stützring erhöht sich die Anzahl der verwendeten Teile nicht. Auch die Anzahl der Setzfugen bleibt im Vergleich zu einem bekannten Verbindungselement aus Radschraube und Stützring gleich, so daß mit erhöhten Setzbeträgen auch dann nicht zu rechnen ist, wenn die Teile z. B. mit einer Zinklamellenbeschichtung gegen Korrosion geschützt werden. Die erfindungsgemäße Ausbildung des Verbindungselements gleicht also den mit einer Zinklamellenbeschichtung grundsätzlich verbundenen Nachteil mehr als aus.

Darüberhinaus kann der Stützring verliersicher an der Radschraube oder der Radmutter angeordnet sein. So entsteht eine leicht handhabbare und immer komplett einsetzbare und eingesetzte Montageeinheit, die auch z. B. von Robotern, insbesondere bei der Erstmontage, gehandhabt werden kann.

Ein weiterer Vorteil des neuen Verbindungselementes besteht darin, daß durch den Einsatz des Stützringes vorteilhaft eine erhöhte Klemmlänge beibehalten wird. Die Radschraube ist damit in günstiger Weise elastisch gestaltet, was die Beibehaltung der Axialkraft, insbesondere beim Auftreten von Setzerscheinungen in der Verbindung, begünstigt. Dies kann z. B. durch die Wahl eines elastischeren Werkstoffs für den Stützring im Vergleich zu dem Werkstoff des Schraubteils oder eine Ausführung des Stützrings als Hohlkörper weiter unterstützt werden. Außerdem kann es sich als günstig erweisen, die Formflächen der Keilflächenverzahnungen unter dem Kopf des Schraubteils kegelig in Bezug zur Achse des Schraubteils auszuführen und durch entsprechende Gestaltung der Gegenfläche einen tellerfederartigen Effekt zu erzielen.

Bei ebener Ausbildung der Keilflächenverzahnung läßt das neue Verbindungselement auch einen Toleranzausgleich zu. Die Stützringe können sich den jeweiligen Bedingungen der Gegenanlagefläche am Rad anpassen. Es können hohe Vorspannkräfte aufgebracht werden und es ergeben sich vergleichsweise höhere Restvorspannkräfte im Betrieb. Die Klemmkräfte lassen sich gleichmäßiger auf die Felge übertragen.

Ein weiterer Vorteil des neuen Verbindungselementes besteht darin, daß die bei Radbefestigungen durch Korrosionserscheinungen häufig auftretenden extrem hohen Löse- bzw. Losdrehmomente auf einem geringeren Niveau und mit kleinerer Streuung ablaufen. Bei dem neuen Verbindungselement läßt sich das Losdrehmoment, das zum Losdrehen des Schraubteils benötigt wird, kleiner einstellen als das Reibmoment zwischen Stützring und Fahrzeugrad. Dies wird durch entsprechende Oberflächengestaltung, Materialwahl und dgl. in einfacher Weise und mit hoher Genauigkeit erreicht. Dies kann sich, insbesondere im Fall eines pannenbedingten Radwechsels, der in der Regel mit dem einfachen Bordwerkzeug ausgeführt werden muß, vorteilhaft auswirken.

Die Keilflächenverzahnungen sind in Umfangsrichtung asymmetrisch ausgebildet. An jedem Zahn weisen sie mindestens zwei in Umfangsrichtung geneigt angeordnete Formflächen auf. Zur Erreichung des Formschlusses sind die in Anzugsdrehrichtung miteinander in Kontakt kommenden Formflächen mit einem relativ großen mittleren Tangentenwinkel angeordnet. Zur Erreichung der Gleitbewegung sind die in Losdrehrichtung miteinander in Kontakt kommenden Formflächen jedoch mit einem vergleichsweise kleinen mittleren Tangentenwinkel angeordnet. Es versteht sich, daß sich die Tangentenwinkel - über die maßgebliche Richtung betrachtet - örtlich ändern, wenn die Formflächen als nicht-ebene Flächen ausgebildet sind. Dies bedeutet, daß der Begriff "nicht-ebene Fläche" durchgehend in einer besonderen Weise zu verstehen ist. Bei einem Schnitt, der zylindrisch um die Achse des Verbindungselementes geführt ist und in die Ebene abgewickelt wird, entsteht als Verschneidungslinie mit den Formflächen, insbesondere mit den in Losdrehrichtung wirksamen Formflächen, eine Linie, die selbst dann, wenn die Formflächen als gewindeartig verlaufende unebene Oberflächen ausgebildet sind, eine Gerade ist. Wenn dagegen eine "nicht-ebene Fläche" vorliegt, entsteht in Umfangsrichtung als Verschneidungslinie eine nicht-gerade, also z.B. gekrümmt oder abgewinkelt, verlaufende Linie, gleichbedeutend mit einem in Umfangsrichtung nicht-konstanten Tangentenwinkel.

Die Formflächen der Keilflächenverzahnungen können durchaus unterschiedlich ausgebildet sein. Es kommen nicht nur ebene Flächen in Frage, sondern auch nicht-ebene Flächen, die beispielsweise ballig, nach Art einer Evolventenverzahnung oder dgl. ausgebildet sind. Die Keilflächenverzahnungen müssen sich auch nicht über den gesamten Bereich der Flächen an dem Schraubteil und dem Sicherungsring erstrecken, sondern können auch nur Bereiche dieser Flächen einnehmen. Auch radial ausgerichtete ebene Flächenbestandteile können durchaus vorgesehen sein. Wichtig ist, daß die Keilflächenverzahnungen abhängig von der jeweiligen Drehrichtung unterschiedliche Eigenschaften aufweisen. In Anzugsdrehrichtung ist ein Formschluß erforderlich. Entgegen der Anzugsrichtung, also in Losdrehrichtung muß der Effekt der schiefen Ebene genutzt werden, um dem Abfall der Axialkraft entgegenzuwirken.

Weiterhin ist es wichtig, daß der jeweils wirksame Tangentenwinkel der in Losdrehrichtung miteinander in Kontakt kommenden Formflächen der Keilflächenverzahnungen größer als der Steigungswinkel des Gewindeabschnitts bemessen ist. Dies gilt zumindest für den ersten Bereich der Keilflächenverzahnungen in Losdrehrichtung.

Es können also die zur Erreichung der Gleitbewegung in Losdrehrichtung miteinander in Kontakt kommenden Formflächen an dem Schraubteil und/oder an dem Stützring zumindest bereichsweise als nicht-ebene Formflächen ausgebildet sein. Die Formflächen besitzen also in Umfangsrichtung unterschiedliche Tangentenwinkel, nicht aber einen konstanten Tangentenwinkel. Der Verlauf des Tangentenwinkels in Losdrehrichtung beginnt mit einem relativ kleinen Tangentenwinkel, der jedoch größer als der Steigungswinkel des Gewindes des Gewindeabschnitts ausgebildet ist, und geht zumindest in einen größeren Tangentenwinkel über. Er kann sogar in einem sehr großen Tangentenwinkel, ähnlich groß wie der wirksame Tangentenwinkel in Festziehrichtung, enden, sodaß ein Überspringen der Keilflächenverzahnungen verhindert und damit die Wiederverwendbarkeit begünstigt wird. In diesem Fall kann durch die Gestaltung dieser Formflächen und deren Verlauf in Umfangsrichtung auf den Verlauf des Losdrehmomentes beim Losdrehen und auf das selbsttätige Lösen auch aufgrund von Setzerscheinungen Einfluß genommen werden.

Der Stützring kann an dem Schraubteil unverlierbar, aber beweglich, angeordnet sein. Die Beweglichkeit bezieht sich auf einen möglichen Versatz zwischen dem Schraubteil und dem Stützring, um eine Anpassung an Teilungsfehler zu ermöglichen. Zum Erreichen der Unverlierbarkeit gibt es verschiedene Möglichkeiten. Eine einfache Möglichkeit besteht darin, den Stützring auf den Schaft des Schraubteils aufzuschieben und erst anschließend das Gewinde am Gewindeabschnitt aufzurollen. Der Außendurchmesser des Gewindes wird dabei größer als der Innendurchmesser der Bohrung am Stützring. Auch das nachträgliche Aufrollen einer Sicherungsrille, eines Wulstes o. dgl. auf den Schaft des Schraubteils ist möglich. Auch Verstemmungen an dem Stützring sind möglich.

Die nicht-ebene Anlagefläche des Stützrings für die Übertragung der Axialkraft auf das Fahrzeugrad kann im Sinne eines vergleichsweise erhöhten Reibmomentes ausgebildet sein. Diese Maßnahme zieht darauf ab, ein größeres Reibmoment zwischen dem Fahrzeugrad und dem Stützring als zwischen dem Stützring und dem Schraubteil vorzusehen, damit ein selbsttätiges Lösen unter Belastung zu einer Bewegung im Bereich der Keilfächenverzahnungen führt und sich somit die Nachspannwirkung vorteilhaft bemerkbar machen kann. Dies gilt zumindest für den Anfangsbereich, in dem sich ein selbsttätiges Lösen unter Querkrafteinwirkung einstellt. Zu diesem Zweck kann auch die Reibung zwischen der Abstützfläche des Schraubteils und dem Stützring z.B. durch reibungsmindernd ausgebildete Oberflächen, Schmiermittelauftrag o.dgl. kleiner als die Reibung bzw. das entsprechende Moment zwischen -Stützring und Fahrzeugrad ausgebildet sein.

Es gibt hierfür mehrere Realisierungsmöglichkeiten. So ist es vorteilhaft möglich, die nicht-ebene Anlagefläche des Stützrings zur Erzeugung einer erhöhten Reibung mit Rippen, leistenartigen Vorsprüngen o. dgl. zu versehen. Auch eine entsprechende oder abgestimmte Gestaltung der Oberfläche des Fahrzeugrades, mit der die nicht-ebene Anlagefläche in Kontakt kommt, ist sinnvoll. Eine weitere Möglichkeit besteht darin, daß die nicht-ebene Anlagefläche des Stützrings zur Erzeugung einer erhöhten Reibung mit einer die Reibung erhöhenden Beschichtung, einer gestrahlten Oberfläche o. dgl. versehen ist. Jegliche Maßnahme, die geeignet ist, die Reibung an dieser Stelle zu erhöhen, kann angewendet werden.

Der Stützring ist mit einer Bohrung bzw. einer Durchbrechung versehen. Dies ist unabhängig davon der Fall, ob er in Verbindung mit einer Radschraube oder einer Radmutter eingesetzt wird. Der Stützring kann in allen Fällen zur Erhöhung seiner Elastizität als Hohlkörper ausgebildet und/oder mit einer an seinem äußeren Umfang angebrachten umlaufenden Dehnrille versehen sein. Der Stützring wird damit gleichsam als elastischer Federkörper ausgebildet. Dies unterstützt die bewußt groß gewählte Klemmlänge des Schraubteils.

Der Stützring und das Schraubteil können aus unterschiedlichen Werkstoffen oder gleichartigen Werkstoffen mit unterschiedlichen Festigkeiten bestehen. Auch dies zielt auf die Beeinflussung der Elastizität, auf die Beherrschung von Flächenpressungen, auf die Verbesserung des Korrosionsverhaltens und insgesamt auf die Verbesserung der Funktion hin.

Die Erfindung wird anhand verschiedener Ausführungsbeispiele weiter erläutert und beschrieben. Es zeigen:
- Fig. 1: eine Ansicht des Verbindungselementes aus Schraubteil und Stützring in einer ersten Ausführungsform,
- Fig. 2: eine Ansicht des Schraubteils gemäß Fig. 1,
- Fig. 3: eine Ansicht auf das Schraubteil von unten,
- Fig. 4: eine Ansicht auf den Stützring von oben,
- Fig. 5: eine Seitenansicht des Stützrings gemäß den Fig. 1 und 4,
- Fig. 6: eine teilweise aufgeschnittene Ansicht des Verbindungselementes gemäß den Fig. 1-5,
- Fig. 7: eine Ansicht des Verbindungselementes aus Schraubteil und Stützring in einer zweiten Ausführungsform,
- Fig. 8: eine Seitenansicht des Stützrings in einer zweiten Ausführungsform,
- Fig. 9: eine Draufsicht auf die Unterseite des Stützrings in einer dritten Ausführungsform,
- Fig. 10: eine Seitenansicht einer weiteren Ausführungsform des Stützrings,
- Fig. 11: eine Seitenansicht einer weiteren Ausführungsform des Stützrings,
- Fig. 12: eine Seitenansicht einer weiteren Ausführungsform des Stützrings,
- Fig. 13: eine Ansicht auf einen weiteren Stützring ähnlich der Darstellung der Fig. 4,
- Fig. 14: eine Draufsicht auf einen weiteren Stützring,
- Fig. 15: eine Draufsicht auf einen weiteren Stützring,
- Fig. 16: eine Draufsicht auf einen als Hohlkörper ausgebildeten Stützring,
- Fig. 17: eine Schnittdarstellung des Stützrings gemäß Fig. 16 nach der Linie XVII-XVII und
- Fig. 18: eine Ansicht und einen Halbschnitt eines Verbindungselementes aus einem als Radmutter ausgebildeten Schraubteil und einem Stützring.

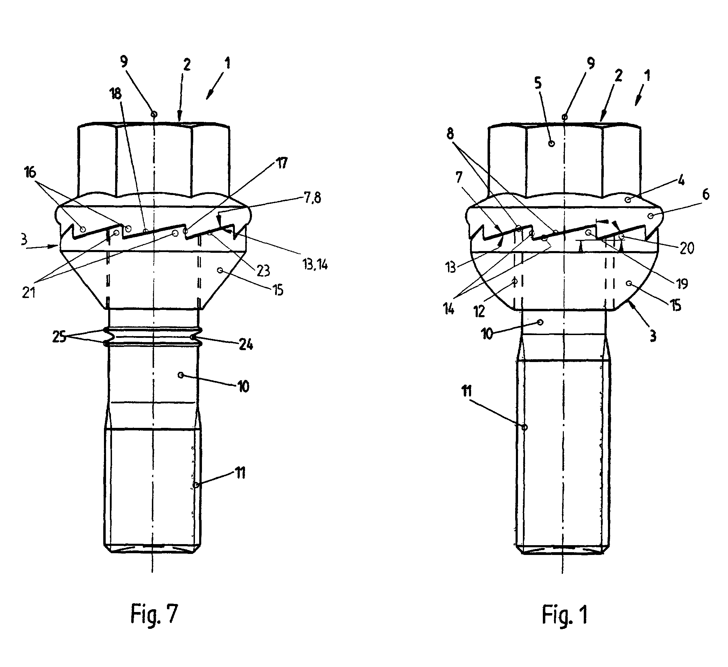

In Fig. 1 ist eine erste Ausführungsform eines Verbindungselementes 1 dargestellt, wie es zur Befestigung von Fahrzeugrädern an der Nabe der Fahrzeugachse eingesetzt wird. Das Verbindungselement 1 besteht aus zwei Teilen, nämlich einem Schraubteil 2 und einem Stützring 3. Das Schraubteil 2 ist hier in Form einer Schraube verwirklicht. Das Schraubteil 2 weist einen Kopf 4 auf, der eine Schlüsselangriffsfläche 5 zum Angriff eines Schraubenschlüssels oder eines ähnlichen Verdrehwerkzeuges besitzt. Der Kopf 4 weist einen verbreiterten Rand 6 auf, der in eine Abstützfläche 7 übergeht. Die Abstützfläche 7 besteht aus mehreren Flächenbestandteilen, die insgesamt eine erste Keilflächenverzahnung 8 bilden. Die Abschnittsfläche 7 kann senkrecht zu einer Achse 9 des Verbindungselementes 1 ausgebildet sein. An die Abstützfläche 7 bzw. die erste Keilflächenverzahnung 8 schließt sich ein Schaft 10 an, der endseitig beginnend mit einem Gewindeabschnitt 11 versehen ist, mit dem das Verbindungselement 1 aus Schraubteil 2 und Stützring 3 in ein entsprechendes Gegengewinde am Fahrzeug eingeschraubt wird.

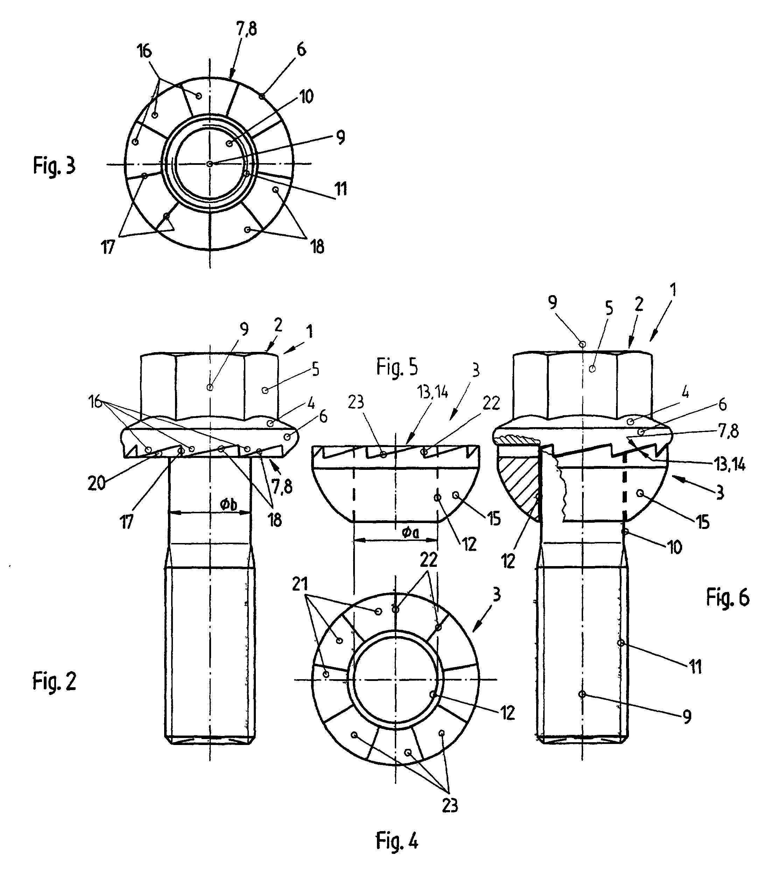

Das zweite Teil des Verbindungselementes 1 ist der Stützring 3. Der Stützring 3 ist ein ringförmiger Körper. Er besitzt fluchtend zur Achse 9 eine Bohrung 12 (Fig. 1, 4, 5 und 6). Wenn die Bohrung 12 (Fig. 1) einen größeren Durchmesser als der Außendurchmesser des Gewindeabschnitts 11 aufweist, können die Teile unmittelbar vor der Montage zusammengeführt werden. Wenn die Bohrung 12 (Fig. 4 bis 6) einen kleineren Durchmesser a als der Außendurchmesser des Gewindeabschnitts 11 und einen größeren Durchmesser a als der Durchmesser b (Fig. 2) des Schaftes 10 aufweist, können die Teile während der Herstellung und vor dem Aufrollen des Gewindes des Gewindeabschnitts 11 zusammengeführt werden. Es entsteht dann eine Montageeinheit, bei der der Stützring 3 unverlierbar an dem Schraubteil 2 gehalten ist.

Auf seiner Oberseite, also dem Kopf 4 des Schraubteils 2 zugekehrt, ist eine Gegenabstützfläche 13 vorgesehen, die mit der Abstützfläche 7 des Schraubteils 2 korrespondiert. An der Gegenabstützfläche 13 ist eine zweite Keilflächenverzahnung 14 ausgebildet, die auf die erste Keilflächenverzahnung 8 des Schraubteils 2 abgestimmt ist.

Der Stützring 3 weist auf seiner Unterseite, also in montiertem Zustand dem Gewindeabschnitt 11 des Schraubteils 2 zugekehrt, eine Anlagefläche 15 auf, die hier ballige bzw. kugelige Form besitzt.

Aus Fig. 1 ist bereits erkennbar, daß die beiden einander zugeordneten Keilflächenverzahnungen 8 und 14 so ausgebildet und in einem solchen Drehsinn angeordnet sind, daß beim Anziehen des Schraubteils 2 während eines Befestigungsvorgangs eines Fahrzeugrades und einer Drehung des Schraubteils im normalen Rechtsdrehsinn eine Mitnahme des Stützrings 3 erfolgt. Umgekehrt erfolgt im Losdrehsinn ein Aufgleiten der Keilflächenverzahnungen 8 und 14 aufeinander unter axialer Entfernung des Kopfes 4 von dem Stützring 3 in Richtung der Achse 9. Das in Fig. 1 dargestellte Verbindungselement 1 ist lose zusammengesteckt, d. h. der Durchmesser der Bohrung 12 ist größer als der Außendurchmesser des Gewindeabschnitts 11. Der Stützring 3 ist damit abnehmbar an dem Schraubteil 2 vorgesehen.

Anhand der Fig. 2 und 3 wird insbesondere die erste Keilflächenverzahnung 8 an dem Schraubteil 2 weiter verdeutlicht und beschrieben. Die Anlagefläche 7 bzw. die erste Keilflächenverzahnung 8 weist in dem Ausführungsbeispiel der Fig. 2 und 3 neun Zähne 16 auf, die in dem ersichtlichen Drehsinn in Verbindung mit einem normalen rechtsgängigen Gewinde des Gewindeabschnitts 11 vorgesehen sind. Jeder Zahn 16 wiederum ist aus zwei Formflächen 17 und 18 zusammengesetzt. Die Formflächen 17 erstrecken sich in radialer Richtung zu der Achse 9 und sind parallel zur Achse 9 angeordnet. Die Verlängerung der Formflächen 17 schneidet die Achse 9. Die senkrecht stehenden Formflächen 17 sind in einem -in Umfangsrichtung gesehen-Tangentenwinkel 19 (Fig. 1) angeordnet, der möglichst groß gewählt ist. Der Tangentenwinkel 19 beträgt hier 90°. Damit ist sichergestellt, daß beim Anziehen des Schraubteiles 2 Formschluß zwischen Schraubteil 2 und Stützring 3 eintritt.

Die anderen Formflächen 18 jedes Zahnes 16 der ersten Keilflächenverzahnung 8 an dem Schraubteil 2 sind in einem vergleichsweise kleinen Tangentenwinkel 20 (Fig. 1 und 2) angeordnet, so daß hier das zum Aufgleiten in Losdrehrichtung benötigte Prinzip der schiefen Ebene verwirklicht wird. Die Formflächen 17 und 18 sind hier als ebene Flächen ausgebildet, die sich vom Rand 6 des Kopfes 4 radial nach innen bis zum Schaft 10 des Schraubteils 2 erstrecken. Infolge der Ausbildung der Formflächen 17 und 18 als ebene Flächen gibt es nur jeweils einen wirksamen Tangentenwinkel 19 bzw. 20 unabhängig von der jeweiligen Verdrehposition zwischen Schraubteil 2 und Stützring 3. Der Tangentenwinkel 20 ist größer als der Steigungswinkel des Gewindes des Gewindeabschnitts 11 des Schraubteils 2.

Die Fig. 4 und 5 zeigen den Stützring 3 mit seiner komplementären Ausbildung der Gegenabstützfläche 13 bzw. der zweiten Keilflächenverzahnung 14. Auch die Keilflächenverzahnung 14 weist neun Zähne 21 auf, die über den Umfang verteilt angeordnet sind. Jeder Zahn 21 ist aus zwei Formflächen 22 und 23 zusammengesetzt. Die Formflächen 22 des Stützrings 3 sind korrespondierend zu den Formflächen 17 des Schraubteils 2 ausgebildet und angeordnet. Die Formflächen 22 sind somit auch im Tangentenwinkel 19 vorgesehen und erstrecken sich radial sowie parallel zur Achse 9, so daß auch hier die Verlängerung der Formflächen 22 die gemeinsame Achse 9 des Verbindungselementes 1 schneiden. Die Formflächen 23 dagegen sind im Tangentenwinkel 20 angeordnet. Sie sind den Formflächen 18 des Schraubteils 2 zugeordnet. Auch die Formflächen 22 und 23 sind in diesem ersten Ausführungsbeispiel als ebene Flächen ausgebildet, so daß ein konstanter Tangentenwinkel 20 Anwendung findet, gleichgültig in welchem relativ zueinander verdrehten Zustand sich die beiden Teile 2 und 3 befinden.

Zum Befestigen eines Fahrzeugrades an der Nabe der Fahrzeugachse werden mehrere Verbindungselemente 1 benötigt. Auf ein Schraubteil 2 wird ein Stützring 3 in der aus den Fig. 1 und 6 erkennbaren Relativlage aufgesteckt und das Schraubteil 2 sodann mit seinem Gewindeabschnitt 11 durch die entsprechende Durchbrechung in der Radschüssel hindurch in das Gegengewinde in der Nabe eingeschraubt. Dabei tritt zwischen Schraubteil 2 und Stützring 3 Formschluß ein, da die Formflächen 22 der Keilflächenverzahnung 14 von den Formflächen 17 der Keilflächenverzahnung 8 mitgenommen werden. Da der Stützring 3 in begrenztem Maße gegenüber dem Schraubteil 2 beweglich ist, kann durch geringfügige radiale Verschiebung der Teile zueinander im begrenzten Umfang ein Ausgleich von Teilungsfehlern der Radschüssel relativ zur Nabe der Achse erfolgen, wodurch ein fester Sitz der Stützringe 3 mit ihren Anlageflächen 15 an den entsprechenden Gegenflächen der Radschüssel erreicht wird. Die Ausbildung ist in der Weise getroffen, daß die Reibung an dieser Stelle größer ist als die Reibung zwischen den Keilflächenverzahnungen 8 und 14 in Losdrehrichtung. Dies zielt darauf ab, daß ein geringfügiges selbsttätiges Lösen des Schraubteils 2 infolge hoher Querkraftbeanspruchung dazu führt, daß mit Hilfe der Formflächen 18 und 23 ein Aufgleitvorgang stattfindet, sich also das Schraubteil 2 relativ zu dem durch Reibschluß feststehenden Stützring 3 in Losdrehrichtung verdreht und dadurch das Schraubteil 2 und der Stützring 3 axial auseinander gedrückt werden, sodaß durch eine Erhöhung der Vorspannkraft ein weiteres selbsttätiges Lösen sicher vermieden wrd. Dies ist ein erheblicher Sicherheitseffekt. Freilich ist es erforderlich, beim bewußten Losdrehen des Verbindungselementes das Schraubteil 2 über eine maximale Momentenschwelle hinweg zu verdrehen, bis die Keilflächenverzahnung 8 erstmalig über die Keilflächenverzahnung 14 übergeschnappt ist. Durch entsprechende Abstimmung der Zahngeometrie auf die in den Flächen der Keilflächenverzahnungen 8, 14 herrschenden Reibungsverhältnisse kann diese Momentenschwelle gezielt eingestellt werden.

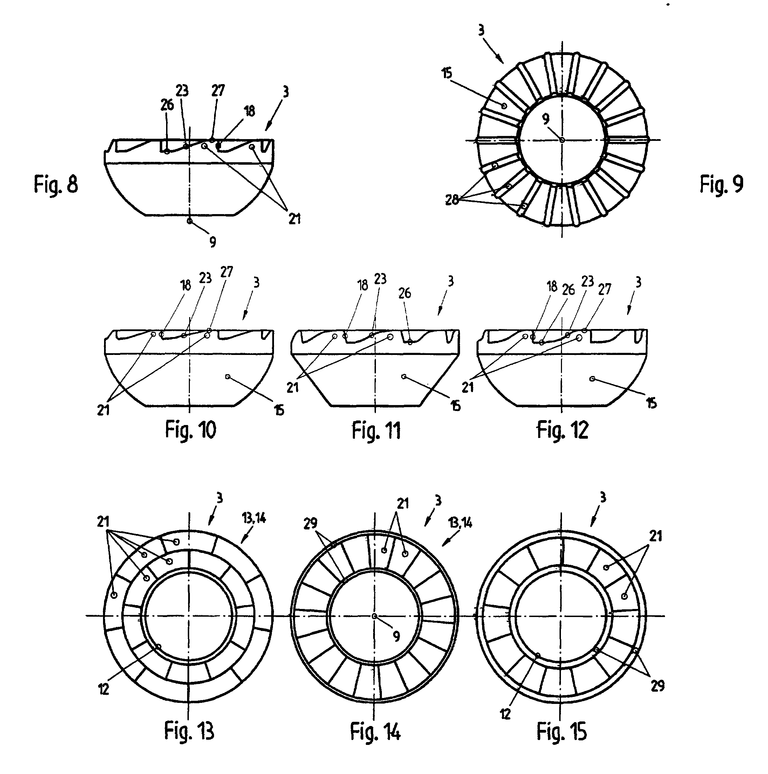

Die in Fig. 7 dargestellte zweite Ausführungsform des Verbindungselementes 1 stimmt in weiten Bereichen mit der Ausführungsform gemäß den Fig. 1-6 überein, weshalb hierauf verwiesen werden kann. Die Anlagefläche 15 des Stützrings 3 ist hier kegelförmig gestaltet. Hierzu gehört eine entsprechende Gegenfläche an den Durchbrechungen der Radschüssel. Auch hier sind das Schraubteil 2 und der Stützring 3 zu einer unverlierbaren Montageeinheit zusammengefügt. Im Bereich des Schaftes 10 des Schraubteils 2 ist nach dem Aufstecken des Stützrings 3 eine Rille 24 eingerollt, durch die zwei Materialwulste 25 entstehen, in denen das Material des Schaftes 10 radial nach außen verdrängt wird. Der Durchmesser im Bereich der Materialwulste 25 ist dann größer als der Durchmesser der Bohrung 12 des Stützrings 3. Damit ist der Stützring 3 verliergesichert an dem Schraubteil 2 festgelegt. Der Stützring 3 kann aber nach wie vor gedreht werden, sich bei der Montage an die Gegebenheiten anpassen und im Lösefall axial weiter ausweichen, als es der Höhe der Keilflächenverzahnungen 8 und 14 entspricht. Es versteht sich, daß für die verliergesicherte Anordnung des Stützrings 3 an dem Schraubteil 2 auch andere Möglichkeiten zur Verfügung stehen.

Fig. 8 verdeutlicht eine weitere Ausführungsform der Gegenabstützfläche 13 und der zweiten Keilflächenverzahnung 14 des Stützrings 3. Es ist erkennbar, daß die Keilflächenverzahnung 14 auch hier Zähne 21 aufweist. Die Zähne 21 besitzen jedoch nicht nur die Formflächen 18 und 23, sondern noch weitere Flächenteile 26 und 27, die in einem Tangentenwinkel 0 angeordnet sind. Die Flächenteile 26 und 27 erstrecken sich also senkrecht zu der Achse 9. Es versteht sich, daß die Keilflächenverzahnung 8 am Schraubteil 2 dann korrespondierend ausgebildet ist. Der Tangentenwinkel 19 der Formflächen 23 ist hier größer ausgebildet als der Tangentenwinkel 19 der Formflächen 23 bei den Ausführungsformen der Fig. 1-7. Dies ist insoweit von Vorteil, als sich in verspanntem Zustand kleinere Flächenpressungen beim Losdrehen während des Überschnappens über einen Zahn der Keilflächenverzahnungen 8, 14 einstellen.

Fig. 9 zeigt die Unterseite eines Stützrings 3 in einer weiteren Ausführungsform. Die dort gebildete Anlagefläche 15 weist Rippen 28 auf, die radial angeordnet sind und aus der ballig oder kegelartig ausgebildeten Anlagefläche 15 hervorragen. Diese Rippen 28 haben die Aufgabe, das Reibmoment zwischen der Anlagefläche 15 und der entsprechenden Gegenanlagefläche an der Radschüssel zu erhöhen, damit dieses Reibmoment größer ist als das Reibmoment zwischen den Keilflächenverzahnungen 8 und 14 in Losdrehrichtung. Eine die Reibung erhöhende Maßnahme kann auch in anderer Weise getroffen sein, beispielsweise durch eine Beschichtung, durch die Gestaltung der Rauhigkeit der Oberfläche der Anlagefläche 15 im Mikrobereich usw..

Die Fig. 10-12 zeigen verschiedene Ausführungsformen der Formflächen 18 und 23 der Zähne 21 am Beispiel der Stützringe 3. Es versteht sich, daß eine komplementäre oder auch eine andersartig angepaßte Ausbildung der Keilflächenverzahnung 8 an dem zugehörigen Schraubteil 2 vorgesehen ist. Anhand der Fig. 10-12 wird verdeutlicht, daß die Formflächen 18 und 23 auch als gekrümmte Flächen ausgebildet sein können. Dies gilt insbesondere für die Formfläche 23, während anhand der Formfläche 18 gezeigt ist, daß hier auch unterschiedliche Tangentenwinkel 19 Anwendung finden können. Auch ein Tangentenwinkel 19, der kleiner als 90° ausgebildet ist, ist zur Herbeiführung eines Formschlusses geeignet (Fig. 11). Gemäß der Ausführungsform der Fig. 10 schließt die Formfläche 23 direkt an die Formfläche 18 an. Sie besitzt im Anfangsbereich einen sehr kleinen Tangentenwinkel, der sich aber dann bei weiterer Verdrehung der Teile zueinander vergrößert. Der Tangentenwinkel 20 über den Ablauf der Relativverdrehung zwischen Stützring 3 und Schraubteil 2 ist damit nicht konstant. Er besitzt im Anfang relativ kleine Werte und steigt gegen Ende der möglichen Verdrehbewegung vor dem Überrasten zu einem relativ großen Wert an. Die Vergrößerung bzw. Zunahme des Tangentenwinkels in Losdrehrichtung kann sinnvoll auch so ansteigen, daß ein Überspringen der Keilflächenverzahnungen 8 und 14 beim Losdrehen verhindert wird. Dadurch wird der Verschleiß reduziert und die Wiederverwendbarkeit des Verbindungselementes begünstigt.

Bei der Ausführungsform gemäß Fig. 11 schließt an die Formfläche 18 zunächst ein Flächenteil 26 mit dem Tangentenwinkel 0 an. Die Formfläche 23 ist hier S-förmig gestaltet mit einem beschleunigt zunehmenden und dann wieder abnehmenden Tangentenwinkel 20.

Bei der Ausführungsform gemäß Fig. 12 ändert sich der Tangentenwinkel 20 der Formfläche 23 ebenfalls über den Verdrehbereich. Außerdem sind hier ebene Flächenteile 26 und 27 zwischen den Formflächen 18 und 23 vorgesehen.

Die Fig. 13-15 zeigen Draufsichten auf mögliche Ausführungsformen der Gegenabstützflächen 13 und der Keilflächenverzahnungen 14. Fig. 13 verdeutlicht, daß die Zähne 21 der Keilflächenverzahnung 14 nicht nur radial durchgehend, sondern gleichsam in zwei ringförmigen Anordnungen und versetzt zueinander angeordnet sein können. Bei der Ausführungsform gemäß Fig. 14 gehen die Zähne 21 radial nach innen und außen nicht vollkommen durch. Es sind hier ebene Flächenringe 29 innen und außen vorgesehen, die die Anordnung der Zähne 21 begrenzen. Obwohl bei diesen Ausführungsbeispielen immer neun Zähne 21 dargestellt sind, versteht es sich, daß auch andere Zähnezahlen, beispielsweise sieben, acht oder elf Zähne, über den Umfang gesehen angeordnet sein können. Fig. 15 zeigt eine Ausführungsform, bei der die ebenen Flächenringe 29 breiter ausgebildet sind als bei dem Ausführungsbeispiel der Fig. 14.

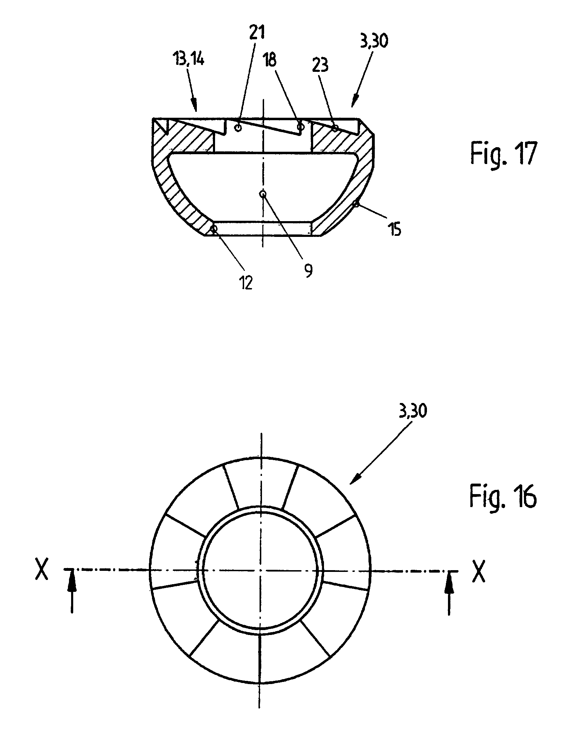

In den Fig. 16 und 17 ist ein weiteres Ausführungsbeispiel für den Stützring 3 verdeutlicht. Die Besonderheit besteht hier darin, daß der Stützring 3 als Hohlkörper 30 ausgebildet ist. Ein solcher Hohlkörper 30 stellt ein elastischeres Bauteil im Vergleich zu den bisher gezeigten Ausführungsformen des Stützrings 3 dar. Die Elastizität ist bewußt erhöht. Damit wird die Gesamtelastizität des Verbindungselementes 1 gesteigert. Dies ist vorteilhaft, insbesondere in Verbindung mit einer großen Klemmlänge des Schraubteils. Die elastischere Gestaltung des Hohlkörpers 30 bzw. des Stützrings 3 ermöglicht auch eine noch bessere Anpassung der Anlagefläche 15 des Stützrings an der entsprechenden Gegenfläche an der Radschüssel. Auch diese Maßnahme trägt dazu bei, die Reibung bzw. das Reibmoment an dieser Stelle zu erhöhen.

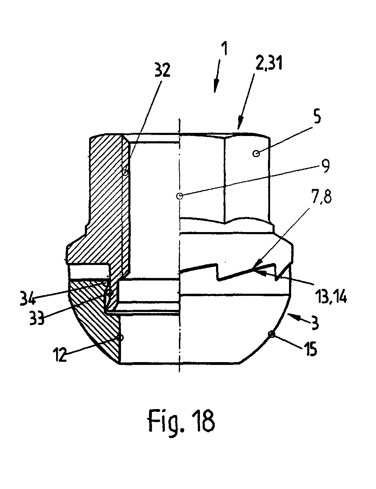

Fig. 18 zeigt schließlich die Anwendung der Erfindung, bei der als Schraubteil 2 nicht eine Radschraube, sondern eine Radmutter 31 vorgesehen ist. Auch dieser Radmutter ist ein Stützring 3 zugeordnet. Es versteht sich, daß die Radmutter 31 durchbrochen ausgebildet ist und ein Innengewinde 32 aufweist. Die Radmutter 31 besitzt auf der dem Stützring 3 zugekehrten Seite einen Fortsatz 33, der nach dem Zusammenfügen von Stützring 3 und Radmutter 31 so verstemmt werden kann, daß er einen Kragen 34 an dem Stützring 3 verliergesichert hintergreift. Auch damit wird dann eine unverlierbare Montageeinheit geschaffen, die auch robotergeeignet ist. Das Schraubteil 2 bzw. die Radmutter 31 weist auch hier die Abstützfläche 7 mit der ersten Keilflächenverzahnung 8 auf. Entsprechend besitzt der Stützring 3 auch die Gegenabstützfläche 13 und die zweite Keilflächenverzahnung 14. Auch hierbei können die Keilflächenverzahnungen 8 und 14 ebene und nicht-ebene Formflächen aufweisen, wie dies anhand der Ausführungsformen der Fig. 1-17 bereits beschrieben wurde.

### BEZUGSZEICHENLISTE

- 1 -: Verbindungselement
- 2 -: Schraubteil
- 3 -: Stützring
- 4 -: Kopf
- 5 -: Schlüsselangriffsfläche
- 6 -: Rand
- 7 -: Abstützfläche
- 8 -: Keilflächenverzahnung
- 9 -: Achse
- 10 -: Schaft

- 11 -: Gewindeabschnitt
- 12 -: Bohrung
- 13 -: Gegenabstützfläche
- 14 -: Keilflächenverzahnung
- 15 -: Anlagefläche
- 16 -: Zahn
- 17 -: Formfläche
- 18 -: Formfläche
- 19 -: Tangentenwinkel
- 20 -: Tangentenwinkel

- 21 -: Zahn
- 22 -: Formfläche
- 23 -: Formfläche
- 24 -: Rille
- 25 -: Materialwulste
- 26 -: Flächenteil
- 27 -: Flächenteil
- 28 -: Rippe
- 29 -: Flächenring
- 30 -: Hohlkörper

- 31 -: Radmutter
- 32 -: Innengewinde
- 33 -: Fortsatz
- 34 -: Kragen

## Patentansprüche

1. Lösbares Verbindungselement (1) für ein Fahrzeugrad, mit einem Schraubteil (2), insbesondere einer Radschraube, und einem Stützring (3), der an dem Schraubteil (2) drehbar angeordnet ist, wobei das Schraubteil (2) einen Gewindeabschnitt (11, 32) und eine Abstützfläche (7) zur Übertragung einer Axialkraft auf den Stützring (3) aufweist und der Stützring (3) eine Gegenabstützfläche (13) und eine nicht-ebene Anlagefläche (15) für die Übertragung der Axialkraft auf das Fahrzeugrad besitzt, **dadurch gekennzeichnet, daß** das Schraubteil (2) auf seiner dem Stützring (3) zugekehrten Abstützfläche (7) eine erste Keilflächenverzahnung (8) und der Stützring (3) auf der dem Schraubteil (2) zugekehrten Gegenabstützfläche (13) eine korrespondierende zweite Keilflächenverzahnung (14) aufweisen, und daß die beiden Keilflächenverzahnungen (8, 14) so ausgebildet und angeordnet sind, daß beim Anziehen des Verbindungselements (1) zwischen Schraubteil (2) und Stützring (3) Formschluß entsteht, während beim Lösen die Keilflächenverzahnungen (8, 14) aufeinander gleiten und das Schraubteil (2) und der Stützring (3) unter Erhöhung der Axialkraft auseinandergedrückt werden.

2. Verbindungselement nach Anspruch 1, **dadurch gekennzeichnet, daß** die Keilflächenverzahnungen (8, 14) in Umfangsrichtung asymmetrisch ausgebildet sind und an jedem Zahn (16, 21) mindestens zwei in Umfangsrichtung geneigt angeordnete Formflächen (17 und 18, 22 und 23) aufweisen, wobei zur Erreichung des Formschlusses die in Anzugsdrehrichtung miteinander in Kontakt kommenden Formflächen (17, 22) mit einem relativ großen mittleren Tangentenwinkel (19) angeordnet sind, während zur Erreichung der Gleitbewegung die in Losdrehrichtung miteinander in Kontakt kommenden Formflächen (18, 23) mit einem vergleichsweise kleinen mittleren Tangentenwinkel (20) angeordnet sind.

3. Verbindungselement nach Anspruch 1 und 2, **dadurch gekennzeichnet, daß** der jeweils wirksame Tangentenwinkel (20) der in Losdrehrichtung miteinander in Kontakt kommenden Formflächen (18 23) der Keilflächenverzahnungen (8, 14) größer als der Steigungswinkel des Gewindeabschnitts (11) bemessen ist.

4. Verbindungselement nach einem oder mehreren der Ansprüche 1 bis 3, **dadurch gekennzeichnet, daß** die zur Erreichung der Gleitbewegung in Losdrehrichtung miteinander in Kontakt kommenden Formflächen (18, 23) an dem Schraubteil (2) und/oder an dem Stützring (3) zumindest bereichsweise als nicht-ebene Formflächen ausgebildet sind.

5. Verbindungselement nach einem oder mehreren der Ansprüche 1 bis 4, **dadurch gekennzeichnet, daß** der Stützring (3) an dem Schraubteil (2) unverlierbar, aber beweglich, angeordnet ist.

6. Verbindungselement nach einem oder mehreren der Ansprüche 1 bis 5, **dadurch gekennzeichnet, daß** die nicht-ebene Anlagefläche (15) des Stützrings (3) für die Übertragung der Axialkraft auf das Fahrzeugrad im Sinne eines vergleichsweise erhöhten Reibmomentes ausgebildet ist.

7. Verbindungselement nach Anspruch 6, **dadurch gekennzeichnet, daß** die nicht-ebene Anlagefläche (15) des Stützrings (3) zur Erzeugung einer erhöhten Reibung mit Rippen (28), leistenartigen Vorsprüngen, mit einer die Reibung erhöhenden Beschichtung, einer gestrahlten Oberfläche o. dgl. versehen ist.

8. Verbindungselement nach einem oder mehreren der Ansprüche 1 bis 7, **dadurch gekennzeichnet, daß** der Stützring (3) zur Erhöhung seiner Elastizität als Hohlkörper (30) ausgebildet und/oder mit einer an seinem äußeren Umfang angebrachten umlaufenden Dehnrille versehen ist.

9. Verbindungselement nach einem oder mehreren der Ansprüche 1 bis 8, **dadurch gekennzeichnet, daß** der Stützring (3) und das Schraubteil (2) aus unterschiedlichen Werkstoffen oder gleichartigen Werkstoffen mit unterschiedlichen Festigkeiten bestehen.

## Claims

1. A detachable fastener (1) assembly for a wheel of a vehicle, comprising:
a screw element (2), especially a wheel bolt, and a supporting ring (3),
the screw element (2) including a threaded portion (11, 32) and a first supporting surface (7) being designed and arranged to transmit an axial force to the supporting ring (3),
the supporting ring (3) being rotatably connected to the screw element (2) and including a second supporting surface (13) and a non-planar bearing surface (15) being designed to transmit an axial force onto a wheel of a vehicle in the mounted position, **wherein**
the screw element (2) includes a number of first wedge shaped teeth (8) being located at the supporting surface (7) to face the supporting ring (3) and the supporting ring (3) includes a number of second wedge shaped teeth (14) being associated with the first wedge shaped teeth (8), and
the first and second wedge shaped teeth (8, 14) being designed and arranged in a way to realize positive engagement between the screw element (2) and the supporting ring (3) when the fastener assembly (1) is being tightened and to make the first and second wedge shaped teeth (8, 14) slide on one another and to press the screw element (2) and the supporting ring (3) apart under an increase of the axial force when the fastener assembly (1) is being loosened.

2. The fastener assembly of claim 1, **wherein** the first and second wedge shaped teeth (8, 14) are designed and arranged to be asymmetric in a circumferential direction and each of the first teeth (16) includes a first form surface (17) and a second form surface (18) and each of the second teeth (21) includes a first form surface (22) and a second form surface (23), the form surfaces being inclined in a circumferential direction, the first form surfaces (17, 22) of the first and second teeth contacting each other and being arranged at a relatively great average tangent angle (19) to realize the positive engagement in a tightening sense of rotation, and the second form surfaces (18, 23) of the first and second teeth contacting each other and being arranged at a relatively small average tangent angle (20) to realize the sliding movement in a loosening sense of rotation.

3. The fastener assembly of claims 1 and 2, **wherein** the respective effective tangent angle (20) of the second form surfaces (18, 23) of the screw element and the supporting ring contacting each other in a loosening sense of rotation is more than a helix angle of the threaded portion (11).

4. The fastener assembly of one or more of the claims 1 to 3, **wherein** the second form surfaces (18, 23) of the screw element (2) and/or of the supporting ring (3) contacting each other and being arranged to realize the sliding movement in a loosening sense of rotation are designed to be at least partially non-planar.

5. The fastener assembly of one or more of the claims 1 to 4, **wherein** the supporting ring (3) is connected to the screw element (2) to be captive but movable.

6. The fastener assembly of one or more of the claims 1 to 5, wherein the non-planar bearing surface (15) of the supporting ring (3) is designed to have increased friction to transmit the axial force onto the wheel of the vehicle.

7. The fastener assembly of claim 6, **wherein** the non-planar bearing surface (15) of the supporting ring (3) includes a number of ribs (28), a number of strip-like protrusions, a coating being designed to increase friction, or is abrasive-blast or the like to increase friction.

8. The fastener assembly of one or more of the claims 1 to 7, **wherein** the supporting ring (3) is designed as a hollow body (30) to increase its elasticity and/or.

9. The fastener assembly of one or more of the claims 1 to 8, **wherein** the supporting ring (3) and the screw element (2) are made of different materials or are made of the same material having different stability.

## Revendications

1. Elément de liaison (1) séparable pour une roue de véhicule, comportant une pièce à vis (2), en particulier une vis pour roue, et une bague d'appui (3) qui est disposée tournante sur la pièce à vis (2), la pièce à vis (2) comportant une section filetée (11, 32) et une surface d'appui (7) pour transmettre une force axiale à la bague d'appui (3), et la bague d'appui (3) présentant une contre-surface d'appui (13) et une surface de contact (15) non plane, pour la transmission de la force axiale à la roue du véhicule, **caractérisé en ce que** la pièce à vis (2) présente, sur sa surface d'appui (7) tournée vers la bague d'appui (3), une première denture à surface conique (8), et la bague d'appui (3) présente, sur la contre-surface d'appui (13) tournée vers la pièce à vis (2), une deuxième denture à surface conique (14) correspondante, et **en ce que** les deux dentures à surface conique (8, 14) sont réalisées et disposées de manière que lorsque l'on serre l'élément de liaison (1) il se produit une liaison par complémentarité de forme entre la pièce à vis (2) et la bague d'appui (3), tandis qu'au desserrage les dentures à surface conique (8, 14) glissent l'une sur l'autre et la pièce à vis (2) et la bague d'appui (3) sont écartées l'une de l'autre avec augmentation de la force axiale.

2. Elément de liaison selon la revendication 1, **caractérisé en ce que** les dentures à surface conique (8, 14) sont réalisées asymétriques dans la direction périphérique et présentent sur chaque dent (16, 21) au moins deux surfaces façonnées (17 et 18, 22 et 23), disposées inclinées dans la direction périphérique, pour obtenir la liaison par complémentarité de forme, les surfaces façonnées (17, 22) venant en contact l'une avec l'autre dans le sens de rotation de serrage étant disposées suivant un angle tangentiel moyen (19) relativement grand, tandis que pour obtenir le mouvement de glissement, les surfaces façonnées (18, 23) venant en contact l'une avec l'autre dans le sens de rotation de desserrage sont disposées suivant un angle tangentiel moyen (20) relativement petit.

3. Elément de liaison selon les revendications 1 et 2, **caractérisé en ce que** l'angle tangentiel (20), opérant dans chaque cas, des surfaces façonnées (18, 23), venant en contact l'une avec l'autre dans le sens de rotation de desserrage, des dentures à surface conique (8, 14), est plus grand que l'angle d'hélice de la section filetée (11).

4. Elément de liaison selon une ou plusieurs des revendications 1 à 3, **caractérisé en ce que** les surfaces façonnées (18, 23), venant en contact l'une avec l'autre dans le sens de rotation de desserrage pour obtenir le mouvement de glissement, sont réalisées sur la pièce à vis (2) et/ou sur la bague d'appui (3) au moins par endroits comme des surfaces façonnées non planes.

5. Elément de liaison selon une ou plusieurs des revendications 1 à 4, **caractérisé en ce que** la bague d'appui (3) est disposée imperdable mais déplaçable sur la pièce à vis (2).

6. Elément de liaison selon une ou plusieurs des revendications 1 à 5, **caractérisé en ce que** la surface de contact (15) non plane de la bague d'appui (3) est conçue pour transmettre la force axiale à la roue du véhicule dans le sens d'un moment de friction relativement accru.

7. Elément de liaison selon la revendication 6, **caractérisé en ce que** pour produire une friction accrue, la surface de contact (15) non plane de la bague d'appui (3) est pourvue de nervures (28), de saillies de type baguette, d'un revêtement augmentant la friction, d'une surface sablée ou similaire.

8. Elément de liaison selon une ou plusieurs des revendications 1 à 7, **caractérisé en ce que** pour accroître son élasticité, la bague d'appui (3) est réalisée comme corps creux (30) et/ou est pourvue d'une gorge de dilatation périphérique pratiquée sur son pourtour extérieur.

9. Elément de liaison selon une ou plusieurs des revendications 1 à 8, **caractérisé en ce que** la bague d'appui (3) et la pièce à vis (2) sont constituées de matériaux différents ou de matériaux de même type avec des résistances différentes.
